# FASCICULE DE BREVET EUROPEEN

(11) **EP 3 307 578 B1**
(45) Date de publication et mention de la délivrance du brevet: **15.01.2020**
(21) Numéro de dépôt: 16726139.5
(22) Date de dépôt: 10.05.2016
(51) Int. Cl.: B60K 1/00, B62D 21/11, B62D 29/00

(54) **TRAVERSE EN ALUMINIUM EXTRUDÉ ET À ZONES LONGITUDINALES PLEINES, POUR LA SUSPENSION D'UNE MACHINE ÉLECTRIQUE MOTRICE D'UN VÉHICULE**
ALUMINIUMSTRANGPRESSQUERTRÄGER MIT FESTEN LÄNGSBEREICHEN ZUR BEFESTIGUNG EINER ELEKTRISCHEN ANTRIEBSMASCHINE EINES FAHRZEUGS
EXTRUDED ALUMINIUM CROSS MEMBER WITH SOLID LONGITUDINAL AREAS, FOR ATTACHING AN ELECTRICAL DRIVE MACHINE OF A VEHICLE

(30) Priorité: 09.06.2015 FR 1555235
(43) Date de publication de la demande: 18.04.2018
(73) Titulaire: PSA AUTOMOBILES S.A., 78300 Poissy (FR)
(72) Inventeur: CHALVET, Manuel, 75015 Paris (FR); MAROILLE, Sylvain, 94120 Fontenay Sous Bois (FR); KREIS, Adrien, 92250 La Garenne Colombes (FR)
(86) Numéro de dépôt international: PCT/FR2016/051084
(87) Numéro de publication internationale: WO 2016/198758

(56) Documents cités:
- WO-A1-2013/059679
- CN-U- 202 541 654
- DE-A1- 19 939 710
- DE-A1-102012 011 797
- FR-A1- 2 702 713
- FR-A1- 2 947 512

## Description

L'invention concerne les véhicules qui comprennent une machine électrique motrice, et plus précisément les traverses de véhicule permettant la suspension de telles machines électriques motrices.

Comme le sait l'homme de l'art, certains véhicules, généralement de type automobile, comprennent une traverse (ou poutre) à laquelle est suspendue une machine électrique motrice via des pièces en élastomère. Cette traverse est solidarisée fixement, soit directement, soit indirectement via des pièces intermédiaires, à des éléments structurels, comme par exemple des brancards. Généralement cette traverse sert également de pièce d'ancrage fixe pour d'autres équipements, comme par exemple une partie au moins de l'électronique de puissance.

Actuellement, les traverses de ce type sont réalisées en tôle ou en aluminium moulé, et donc leur poids doit être relativement important pour offrir une tenue suffisante aux contraintes pouvant survenir en cas de choc ou d'événement exceptionnel. De plus leur mode de réalisation nécessite des outillages relativement onéreux.

L'invention a notamment pour but d'améliorer la situation.

Le document WO2013 059679 décrit une traverse selon le préambule de la revendication 1. Elle propose notamment à cet effet une traverse selon la revendication 1.

Grâce à son extrusion la traverse peut présenter une masse réduite par rapport à celles qui sont réalisées en tôle ou en aluminium moulé, pour une tenue aux contraintes identique. Par ailleurs, grâce à la présence de zones longitudinales pleines avec des trous de fixation la traverse peut être solidement solidarisée à des éléments structurels et servir de point d'ancrage pour différents équipements sans qu'il faille lui adjoindre des éléments de fixation, comme par exemple des écrous.

La traverse selon l'invention peut comporter d'autres caractéristiques qui peuvent être prises séparément ou en combinaison, et notamment :
- l'une au moins des zones longitudinales peut être un bord longitudinal ;
- l'une au moins des zones longitudinales peut être située entre deux bords longitudinaux ;
- l'une au moins des zones longitudinales peut s'étendre entre deux extrémités d'un bord longitudinal ;
- l'une au moins des zones longitudinales peut s'étendre verticalement sur une partie d'une hauteur séparant des faces inférieure et supérieure ;
- elle peut être extrudée suivant une direction d'extrusion qui est destinée à être sensiblement parallèle à une direction transversale du véhicule, elle-même sensiblement perpendiculaire à des côtés latéraux du véhicule ;
- certains au moins des trous peuvent être taraudés.

L'invention propose également un véhicule, éventuellement de type automobile, et comprenant une machine électrique motrice, et une traverse du type de celle présentée ci-avant et à laquelle est suspendue cette machine électrique motrice.

Par exemple, cette traverse peut être installée suivant une direction qui présente une désorientation par rapport à une direction transversale du véhicule, elle-même sensiblement perpendiculaire à des côtés latéraux du véhicule.

D'autres caractéristiques et avantages de l'invention apparaîtront à l'examen de la description détaillée ci-après, et des dessins annexés (obtenus en CAO/DAO, d'où le caractère apparemment discontinu de certaines lignes), sur lesquels :
- la figure 1 illustre schématiquement et fonctionnellement, dans une vue du dessus, un exemple de traverse selon l'invention couplée de façon rigide à des éléments structurels et à laquelle est solidarisée de façon non rigide une machine électrique motrice,
- la figure 2 illustre schématiquement et fonctionnellement, dans une vue de côté, la traverse de la figure 1,
- la figure 3 illustre schématiquement, dans une vue en perspective, un exemple de réalisation d'une traverse selon l'invention, après extrusion et définition de trous de fixation,
- la figure 4 illustre schématiquement, dans une vue de face (du côté avant), la traverse de la figure 3 couplée à des éléments structurels d'un véhicule, mais avant couplage à une machine électrique motrice et à des équipements,
- la figure 5 illustre schématiquement, dans une vue en perspective (du côté avant), la traverse de la figure 3 avant son couplage à des éléments structurels d'un véhicule, mais après solidarisation de pattes de fixation pour le couplage d'une machine électrique motrice, et
- la figure 6 illustre schématiquement, dans une vue en perspective, un autre exemple de traverse selon l'invention couplée de façon non rigide à des éléments structurels et à laquelle est solidarisée de façon rigide une machine électrique motrice.

L'invention a notamment pour but de proposer une traverse TS destinée au moins à supporter une machine électrique motrice ME dans un véhicule.

Dans ce qui suit, on considère, à titre d'exemple non limitatif, que le véhicule est de type automobile. Il s'agit par exemple d'une voiture. Mais l'invention n'est pas limitée à ce type de véhicule. Elle concerne en effet tout véhicule comportant une machine électrique motrice devant être supportée par une traverse, et notamment les véhicules terrestres et les véhicules maritimes ou fluviaux.

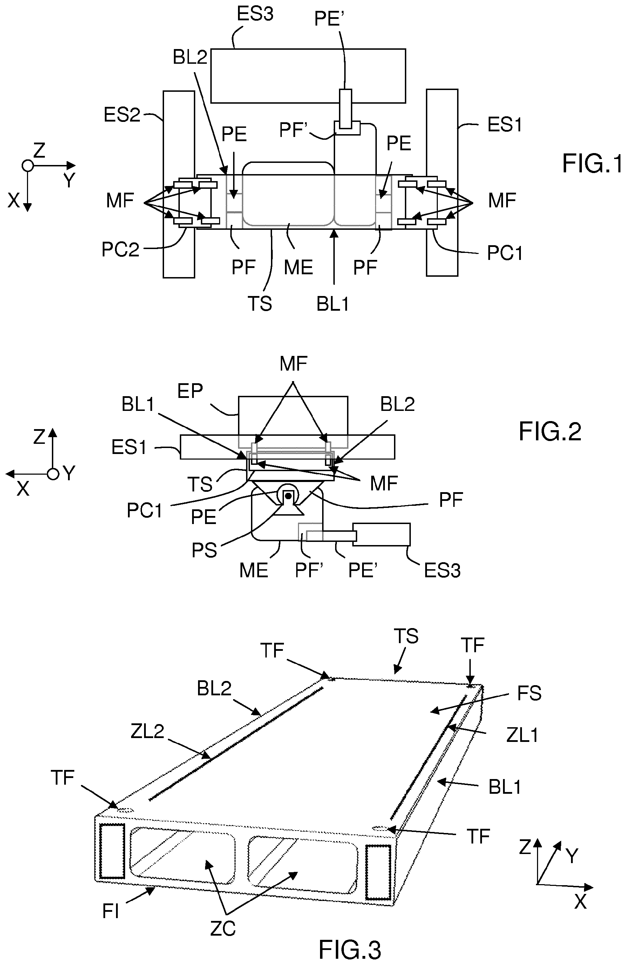

Sur les figures 1 à 6, la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale, laquelle est perpendiculaire aux directions longitudinale X et transversale Y.

Comme illustré sur les figures 1 et 2, une traverse (ou poutre) TS, selon l'invention, est destinée à permettre la suspension d'une machine électrique motrice ME d'un véhicule, et à être couplée à des éléments structurels ES1 et ES2 de ce véhicule. Par exemple, ces éléments structurels ES1 et ES2 sont ce que l'homme de l'art appelle respectivement des brancards gauche et droit.

Comme cela apparaît mieux sur la figure 3, cette traverse TS est réalisée en aluminium extrudé, et comprend au moins deux zones longitudinales ZLj pleines et dans lesquelles sont définis, en des endroits choisis, des trous TF propres à permettre la fixation de la machine électrique motrice ME et/ou d'un équipement du véhicule, et/ou son couplage aux éléments structurels ES1 et ES2.

On entend ici par « plein » le fait d'être rempli de matière solide. Ce remplissage peut résulter de la phase d'extrusion ou bien d'un apport de matière solide postérieurement à la phase d'extrusion, dans des zones évidées pendant cette dernière. Les zones pleines coexistent avec des zones creuses ZC caractéristiques de l'opération d'extrusion.

De préférence, la traverse TS est extrudée suivant une direction d'extrusion qui est destinée à être sensiblement parallèle à la direction transversale Y du véhicule.

On notera que l'une au moins des zones longitudinales ZLj peut s'étendre verticalement sur une partie de la hauteur (suivant Z) qui sépare les faces inférieure FI et supérieure FS de la traverse TS (voir figure 3). Mais cela n'est pas obligatoire. En effet, l'une au moins des zones longitudinales ZLj peut s'étendre verticalement sur toute la hauteur séparant les faces inférieure FI et supérieure FS de la traverse TS. Ce qui est important c'est que cette hauteur permette de définir des trous TF propres à assurer efficacement leur fonction.

Par ailleurs, la zone « centrale » située entre les bords longitudinaux BLk (k = 1 ou 2) de la traverse TS peut présenter une hauteur (ou épaisseur) inférieure à la hauteur (ou l'épaisseur) de ces bords longitudinaux BLk. On entend ici par « bord longitudinal BLk » un bord (ou côté) de la traverse TS qui s'étend entre les éléments structurels ES1 et ES2.

On notera également, comme illustré non limitativement sur les figures 1 et 3 à 5, que l'une au moins des zones longitudinales ZLj peut être l'un des deux bords longitudinaux BLk de la traverse TS. On comprendra que dans ce cas la zone longitudinale ZLj s'étend sur toute la longueur de la traverse TS (sensiblement suivant la direction transversale Y). Mais cela n'est pas obligatoire (elle pourrait en effet s'étendre sur une partie de cette longueur).

Dans l'exemple illustré non limitativement sur la figure 3, la traverse TS comprend seulement deux zones longitudinales ZL1 et ZL2 (j = 1 ou 2) qui sont matérialisées par deux lignes droites et qui sont respectivement les deux bords longitudinaux BL1 et BL2. Mais l'une au moins des zones longitudinales ZLj pourrait être située entre deux bords longitudinaux BLk de la traverse TS. Cette dernière solution peut être mise en œuvre lorsque l'on a besoin de trou(s) TF dans une partie « centrale » de la traverse TS qui est située entre ses deux bords longitudinaux BLk.

On comprendra que plus la traverse TS comprend de zones longitudinales ZLj, plus elle est lourde du fait que ces dernières (ZLj) sont remplies de matière solide.

Un trou TF, défini dans une zone longitudinale ZLj, peut servir seulement à la fixation de la machine électrique motrice ME, ou seulement à la fixation d'un équipement du véhicule, comme par exemple une partie au moins de l'électronique de puissance EP (voir figure 2), ou simultanément à la fixation de la machine électrique motrice ME et d'un équipement du véhicule, ou seulement au couplage de la traverse TS à un élément structurel ES1 ou ES2, ou encore simultanément au couplage de la traverse TS à un élément structurel ES1 ou ES2 et à la fixation de la machine électrique motrice ME ou d'un équipement du véhicule.

On notera que certains au moins des trous TF peuvent être taraudés afin de permettre le vissage d'une partie filetée d'une vis ou d'un boulon MF. Dans ce cas, la hauteur du filetage interne d'un trou taraudé TF est de préférence au moins égale à environ 20 mm lorsque la vis (ou le boulon) est de type M10.

Dans l'exemple illustré non limitativement sur la figure 2, une partie au moins de l'électronique de puissance EP du véhicule est solidarisée à la face supérieure FS de la traverse TS au moyen de moyens de fixation MF (comme par exemple des vis ou boulons) qui coopèrent avec des trous TF, tandis que la machine électrique motrice ME est suspendue à la face inférieure FS de la traverse TS au moyen de deux pattes de fixation PF solidarisées à cette dernière (TS) au niveau de trous TF.

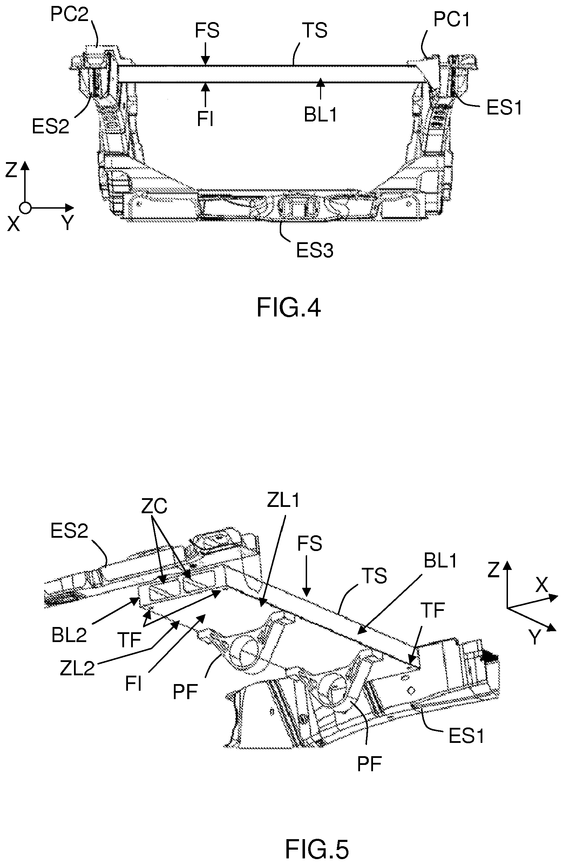

Par exemple, et comme illustré non limitativement sur les figures 2 et 5, ces pattes de fixation PF peuvent comprendre une partie centrale évidée dans laquelle est logée étroitement une pièce en élastomère PE qui est solidarisée à une patte de support PS, elle-même solidarisée fixement à une partie de la machine électrique motrice ME. Chaque pièce en élastomère PE est chargée de filtrer les vibrations induites par la machine électrique motrice ME (de préférence dans les trois directions de l'espace), et présente, par exemple, une forme cylindrique circulaire. Dans ce cas, la partie centrale évidée de chaque patte de fixation PF est circulaire.

Par ailleurs, chaque patte de fixation PF est solidarisée à la face inférieure FI de la traverse TS via au moins une vis ou un boulon MF, et de préférence deux.

De plus, chaque patte de fixation PF peut, par exemple, être réalisée en métal (par exemple en aluminium ou en acier), ou en matière plastique rigide et résistante.

Dans une variante de réalisation non illustrée, la machine électrique motrice ME pourrait être suspendue sous la face inférieure FS de la traverse TS au moyen de deux cales porteuses (ou supports) dont les extrémités supérieures traversent des trous définis par usinage dans la partie centrale de la traverse TS afin d'être solidarisées à la face supérieure FS de cette dernière (TS), de préférence via des pièces en élastomère. Les extrémités supérieures des cales porteuses sont alors solidarisées fixement à la face supérieure FS, directement ou indirectement, au moyen de vis traversant partiellement des trous TF définis dans la partie centrale de la traverse TS.

On notera, comme illustré non limitativement sur les figures 1 et 2, que la machine électrique motrice ME peut être également couplée, via une autre pièce en élastomère PE', à un autre élément structurel ES3 du véhicule. Cet autre élément structurel ES3 peut, par exemple, être ce que l'homme de l'art appelle un berceau. Ce dernier (ES3) est généralement installé sensiblement suivant la direction longitudinale X du véhicule. Cette autre pièce en élastomère PE' est chargée d'amortir suivant la direction longitudinale X les vibrations induites par la production de couple. Par ailleurs, cette autre pièce en élastomère PE' est solidarisée à la machine électrique motrice ME via une autre patte de fixation PF' de cette dernière (ME).

Comme illustré non limitativement sur les figures 1, 2 et 4, la traverse TS peut être solidarisée (ou couplée) aux éléments structurels ES1 et ES2 indirectement, via respectivement deux pièces de couplage PC1 et PC2. Ces dernières (PC1 et PC2) peuvent, par exemple, être réalisées en métal (par exemple en aluminium ou en acier), ou en matière plastique rigide et résistante. Mais dans une variante de réalisation non illustrée, la traverse TS pourrait être solidarisée directement aux éléments structurels ES1 et ES2.

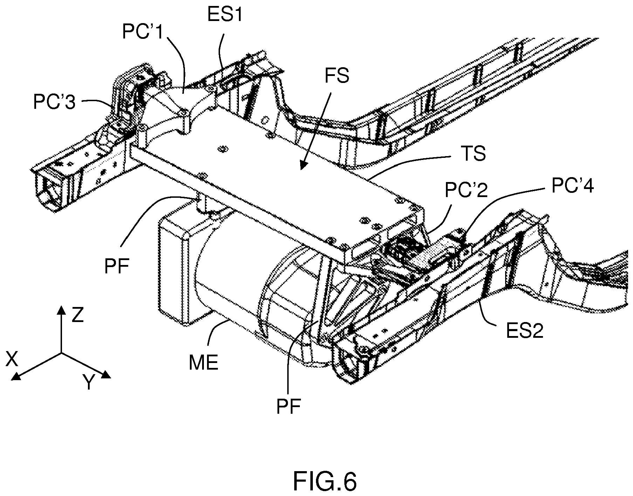

Dans une autre variante de réalisation illustrée sur la figure 6, la traverse TS est solidarisée aux éléments structurels ES1 et ES2 indirectement, via respectivement quatre pièces de couplage PC'1 à PC'4.

Les pièces de couplage PC'1 et PC'2 sont rigides et solidarisées fixement à la traverse TS. On notera, comme illustré non limitativement qu'elles peuvent être différentes entre elles, voire très différentes. Mais elles pourraient être identiques. Par exemple, ces pièces de couplage PC'1 et PC'2 peuvent être réalisées en métal (par exemple en aluminium ou en acier), ou en matière plastique rigide et résistante.

Les pièces de couplage PC'3 et PC'4 sont partiellement ou totalement non rigides et solidarisées fixement, d'une part, aux pièces de couplage PC'1 et PC'2 et, d'autre part, aux éléments structurels ES1 et ES2. En fait, elles comprennent au moins une partie non rigide chargée de filtrer les vibrations induites par la machine électrique motrice ME (de préférence dans les trois directions de l'espace). Cette partie non rigide est par exemple réalisée en élastomère.

On notera, comme illustré non limitativement, que l'une des pièces de couplage rigides PC'1 peut être éventuellement agencée pour assurer un déport vers le haut suivant la direction verticale Z, tandis que l'autre pièce de couplage rigide PC'2 peut être éventuellement agencée pour assurer un déport vers le bas suivant la direction verticale Z.

Par ailleurs, comme illustré non limitativement sur les figures 1, 2, 4 et 5, la traverse TS peut être installée dans le véhicule sensiblement parallèlement à la direction transversale Y. Mais cela n'est pas obligatoire. En effet, la traverse TS pourrait être installée dans le véhicule suivant une direction générale qui est légèrement désorientée par rapport à la direction transversale Y (dans le plan XY). Dans ce cas, l'angle de désorientation peut, par exemple, être compris entre environ 3° et environ 20°.

Bien que cela n'apparaisse pas sur les figures, la traverse TS peut éventuellement comprendre sur ces bords longitudinaux BLk au moins un bossage suivant la direction longitudinale X. Ce type de bossage est destiné à permettre la fixation d'élément(s) sous le capot du véhicule, comme par exemple un flexible, une canalisation, une pompe, un composant électronique, un compresseur, avec un positionnement suivant la direction longitudinale X potentiellement plus favorable sur le plan de l'implantation et/ou du montage.

La traverse en aluminium extrudé selon l'invention offre plusieurs avantages par rapport à une traverse en tôle ou en aluminium moulé, parmi lesquels :
- une réduction du coût de fabrication et de la masse,
- une réduction du coût de l'outillage,
- de meilleures caractéristiques physiques, et en particulier une meilleure tenue aux chocs exceptionnels et une meilleure tenue en fatigue.

## Revendications

1. Traverse (TS) réalisée en aluminium extrudé pour la suspension d'une machine électrique motrice (ME) de véhicule, et comprenant au moins deux zones longitudinales creuses évidées pendant la phase d'extrusion, **caractérisée en ce que** ces deux zones longitudinales creuses sont, postérieurement à la phase d'extrusion, remplies de matière solide rapportée formant alors au moins deux zones longitudinales (ZLj) pleines dans lesquelles sont définis en des endroits choisis des trous (TF) propres à permettre une fixation de ladite machine électrique motrice (ME) et/ou d'un équipement dudit véhicule, et/ou un couplage de ladite traverse (TS) à des éléments structurels (ES1, ES2) dudit véhicule.

2. Traverse selon la revendication 1, **caractérisée en ce que** l'une au moins desdites zones longitudinales (ZLj) est un bord longitudinal.

3. Traverse selon l'une des revendications 1 et 2, **caractérisée en ce que** l'une au moins desdites zones longitudinales (ZLj) est située entre deux bords longitudinaux.

4. Traverse selon l'une des revendications 1 à 3, **caractérisée en ce que** l'une au moins desdites zones longitudinales (ZLj) s'étend verticalement sur une partie d'une hauteur séparant des faces inférieure (FI) et supérieure (FS).

5. Traverse selon l'une des revendications 1 à 4, **caractérisée en ce qu'**elle est extrudée suivant une direction d'extrusion destinée à être sensiblement parallèle à une direction transversale dudit véhicule, elle-même sensiblement perpendiculaire à des côtés latéraux dudit véhicule.

6. Traverse selon l'une des revendications 1 à 5, **caractérisée en ce que** certains au moins desdits trous (TF) sont taraudés.

7. Véhicule comprenant une machine électrique motrice (ME), **caractérisé en ce qu'**il comprend en outre une traverse (TS) selon l'une des revendications précédentes, et à laquelle est suspendue ladite machine électrique motrice (ME).

8. Véhicule selon la revendication 7, **caractérisé en ce que** ladite traverse (TS) est installée suivant une direction présentant une désorientation par rapport à une direction transversale dudit véhicule, elle-même sensiblement perpendiculaire à des côtés latéraux dudit véhicule.

9. Véhicule selon l'une des revendications 7 et 8, **caractérisé en ce qu'**il est de type automobile.

## Patentansprüche

1. Querträger (TS), der aus Strangpressaluminium für die Aufhängung einer elektrischen Antriebsmaschine (ME) eines Fahrzeugs hergestellt ist, und der mindestens zwei hohle Längszonen umfasst, die während der Strangpressphase ausgehöhlt werden, **dadurch gekennzeichnet, dass** die zwei hohlen Längszonen nach der Strangpressphase mit zugefügtem festem Material gefüllt werden, die daher mindestens zwei massive Längszonen (ZLj) bilden, in welchen an ausgewählten Stellen Löcher (TF) definiert sind, die geeignet sind, um eine Befestigung der elektrischen Antriebsmaschine (ME) und/oder einer Ausstattung des Fahrzeugs und/oder einer Kopplung des Querträgers (TS) an Strukturelementen (ES1, ES2) des Fahrzeugs zu erlauben.

2. Querträger nach Anspruch 1, **dadurch gekennzeichnet, dass** mindestens eine der Längszonen (ZLj) ein Längsrand ist.

3. Querträger nach einem der Ansprüche 1 und 2, **dadurch gekennzeichnet, dass** mindestens eine der Längszonen (ZLj) zwischen zwei Längsrändern liegt.

4. Querträger nach einem der Ansprüche 1 bis 3, **dadurch gekennzeichnet, dass** sich mindestens eine der Längszonen (ZLj) vertikal auf einem Teil einer Höhe, die eine untere (FI) und eine obere Fläche (FS) trennt, erstreckt.

5. Querträger nach einem der Ansprüche 1 bis 4, **dadurch gekennzeichnet, dass** er entlang einer Strangpressrichtung stranggepresst ist, die dazu bestimmt ist, im Wesentlichen zu einer Querrichtung des Fahrzeugs, die selbst im Wesentlichen zu Seiten des Fahrzeugs senkrecht ist, parallel zu sein.

6. Querträger nach einem der Ansprüche 1 bis 5, **dadurch gekennzeichnet, dass** mindestens bestimmte der Löcher (TF) Innengewinde gebohrt haben.

7. Fahrzeug, das eine elektrische Antriebsmaschine (ME) umfasst, **dadurch gekennzeichnet, dass** es außerdem einen Querträger (TS) nach einem der vorstehenden Ansprüche umfasst, und an dem die elektrische Antriebsmaschine (ME) aufgehängt ist.

8. Fahrzeug nach Anspruch 7, **dadurch gekennzeichnet, dass** der Querträger (TS) entlang einer Richtung installiert ist, die eine Ausrichtungsabweichung bezüglich einer Querrichtung des Fahrzeugs, die selbst im Wesentlichen zu Seiten des Fahrzeugs senkrecht ist, aufweist.

9. Fahrzeug nach einem der Ansprüche 7 und 8, **dadurch gekennzeichnet, dass** es vom Automobiltyp ist.

## Claims

1. A cross member (TS) made from extruded aluminium for attaching an electrical drive machine (ME) of a vehicle, and including at least two hollow longitudinal areas which are hollowed out during the extrusion phase,
**characterized in that** these two hollow longitudinal areas are, subsequently to the extrusion phase, filled with solid added material thus forming at least two solid longitudinal areas (ZLj), in which there are defined at selected locations holes (TF) suitable for permitting an attaching of said electrical drive machine (ME) and/or of an equipment of the said vehicle, and/or a coupling of the said cross member (TS) to structural elements (ES1, ES2) of the said vehicle.

2. The cross member according to Claim 1, **characterized in that** one at least of said longitudinal areas (ZLj) is a longitudinal edge.

3. The cross member according to one of Claims 1 and 2, **characterized in that** one at least of said longitudinal areas (ZLj) is situated between two longitudinal edges.

4. The cross member according to one of Claims 1 to 3, **characterized in that** one at least of said longitudinal areas (ZLj) extends vertically over a portion of a height separating lower (FI) and upper (FS) faces.

5. The cross member according to one of Claims 1 to 4, **characterized in that** it is extruded along an extrusion direction intended to be substantially parallel to a transverse direction of said vehicle, itself substantially perpendicular to lateral sides of said vehicle.

6. The cross member according to one of Claims 1 to 5, **characterized in that** some at least of said holes (TF) are threaded.

7. A vehicle including an electrical drive machine (ME), **characterized in that** it furthermore includes a cross member (TS) according to one of the preceding claims, and to which said electrical drive machine (ME) is attached.

8. The vehicle according to Claim 7, **characterized in that** said cross member (TS) is installed along a direction having a disorientation with respect to a transverse direction of said vehicle, itself substantially perpendicular to lateral sides of said vehicle.

9. The vehicle according to one of Claims 7 and 8, **characterized in that** it is of the automobile type.
